# EUROPÄISCHE PATENTSCHRIFT

(11) **EP 0 756 127 B1**
(45) Veröffentlichungstag und Bekanntmachung des Hinweises auf die Patenterteilung: **14.03.2001**
(21) Anmeldenummer: 96109555.1
(22) Anmeldetag: 14.06.1996
(51) Int. Cl.: F16L 37/12, F16L 37/133, F16L 37/084

(54) **Kupplungshülse einer Schlauch-Schnellkupplung und Verfahren zur Herstellung**
Sleeve for a quick acting coupling for hoses and manufacturing process
Manchon d'un raccord rapide pour tuyaux souples et procédé de fabrication

(30) Priorität: 22.07.1995 DE 19526884
(43) Veröffentlichungstag der Anmeldung: 29.01.1997
(73) Patentinhaber: GARDENA Kress + Kastner GmbH, D-89079 Ulm (DE)
(72) Erfinder:
(74) Vertreter: Patentanwälte Ruff, Beier und Partner

(56) Entgegenhaltungen:
- DE-A- 1 775 302
- DE-U- 9 010 211
- GB-A- 785 282
- US-A- 4 007 909

## Beschreibung

Die Erfindung betrifft die Hülse eines Gartengerätes, insbesondere eine betätigbare Kupplungshülse einer Schlauch-Schnellkupplung, die einen Grundkörper aus relativ hartem Kunststoffmaterial und ein einen Oberflächenabschnitt der Hülse einnehmendes, aus flexiblem, gummiartigem Material bestehendes Zusatzelement aufweist, das mit dem Grundkörper unlösbar verbunden ist.

Aus dem DE-U-90 10 211.8 ist eine Hülse bekanntgeworden, bei der auf eine ringförmige Ausnehmung ein ringförmiges Band aus einem weichen Material gewickelt ist. Dieses Material kann Kautschukmaterial sein und eine rauhe Außenbeschaffenheit haben. Bei der GB 785 282 wird ein Gummi-Schlauchabschnitt auf eine gattungsgemäße Hülse gezogen und ggf. festgeklebt.

### AUFGABE UND LÖSUNG

Aufgabe der Erfindung ist es, eine Hülse und ein Herstellungsverfahren dafür zu schaffen, die es ermöglicht, an ergonomisch und aufgrund der Benutzungsumstände festgelegten Stellen griffgünstige und Beschädigungen verhindernde Zusatzelemente vorzusehen. Diese Aufgabe wird durch die Merkmale der Ansprüche 1 und 9 gelöst.

Das Zusatzelement geht also mit dem Grundkörper eine direkte haftende Verbindung Oberfläche zu Oberfläche ein, die es ermöglicht, z.B. auch zumindest teilweise die Hülse nicht ganz umfassende, ggf. auch gänzlich voneinander gesonderte Oberflächenabschnitte vorzusehen. Dies können beispielsweise Griffmulden sein, die selbst auch eine gewisse Oberflächenstruktur haben. Gesondert davon und auch im Bereich dieser Griffmulden können auch Gestaltungs- und Hinweiselemente vorgesehen sein, die durch das Zusatzelement gebildet werden. So kann beispielsweise das Zusatzelement Oberflächenabschnitte bilden, die mit der Oberfläche des Grundkörpers derart abwechseln, daß sich daraus Zeichen, Buchstaben oder Bildelemente bilden, z.B. Hinweispfeile für die Bedienung, Bezeichnungen einer bestimmten Kupplungsart oder dgl.. Dazu können vorzugsweise Grundkörper am Zusatzelement unterschiedliche Farben haben. Es ist auch bevorzugt, daß das Zusatzelement bei Nässe griffige und auch besonders alterungsbeständige Materialeigenschaften hat, um im Garten auch nach langer Sonnenbestrahlung seine Flexibilität und Griffgünstigkeit, z.B. bei nassen Händen, zu behalten.

Zusätzlich zu der Möglichkeit einer abschnittsweisen Festlegung kann aber auch eine umlaufende Ausbildung eines Teiles der Zusatzelemente vorgesehen sein, beispielsweise im Bereich einer Stirnkante der Hülse. Dadurch kann ein Kantenschutz geschaffen werden, der besonders wichtig ist, wenn es sich um Gartengeräte handelt, die häufig vom Benutzer hinter sich hergezogen werden und dann bevorzugt mit diesen Stirnkanten an Steinen, Beetumfassungen etc. anstoßen.

Das Zusatzelement ist in schalen- oder rinnenartige Ausnehmungen des Grundkörpers eingespritzt. Dadurch ergibt sich die jedenfalls im Normalbetrieb unlösbare Verbindung. Die erfindungsgemäße Herstellungsart geschieht durch ein Zweikomponenten-Spritzverfahren. Bei diesem Verfahren wird in der Spritzgießform auf den noch warmen, aber schon erhärteten Grundkörper, der aus einem relativ harten Kunststoffmaterial besteht, in einem zweiten Arbeitsgang die zweite Komponente, nämlich das weichere Kunststoffmaterial des Zusatzelementes, aufgespritzt. Dabei wird die zweite Komponente mit dem Grundkörper zu einer unlösbaren Verbindung verschweißt.

Das Herstellungsverfahren umfaßt die Schritte der Herstellung des Grundkörpers im Kunststoffspritzverfahren aus einem thermoplastischen relativ harten Kunststoffmaterial mit gegenüber der Endform ausgebildeten, schalen- oder rinnenartigen Ausnehmungen, in die unmittelbar anschließend bei noch warmem Material des Grundkörpers ein flexibles gummiartiges thermoplastisches Kunststoffmaterial in Haftverbindung mit dem Material des Grundkörpers eingespritzt wird.

Es ist zu erkennen, daß durch die Erfindung die Möglichkeit geschaffen wird, für das Grundkörpermaterial einen relativ harten und dementsprechend für seine Funktion, beispielsweise als Betätigungshülse einer Schnellkupplung, notwendigen Präzision und Unveränderbarkeit der Form herzustellen, wobei auf die Flexibilität und Schlagfestigkeit des Materials kein so großer Wert gelegt zu werden braucht, ebensowenig auf die griffgünstige Oberfläche. Diese wird dann mittels des Zusatzelementes vorgesehen, wobei auch in weitgehender konstruktiver Freiheit und ohne Beschränkung auf ausschließlich umlaufende Anbringung besonders stoßgefährdete Stellen mit dem flexiblen Zusatzelement versehen werden können. Dementsprechend eignet sich die Hülse auch für andere Gartengeräte, beispielsweise die Betätigungshülse von Gartenspritzen, die Schraubhülsen von Schlauchanschlüssen etc.. Es ist auch möglich, die flexiblen Eigenschaften des Zusatzelementes für andere Zwecke auszunutzen, beispielsweise als eine Art flexible Abdeckmembran über konstruktionsbedingten Spalten oder Ausnehmungen, die einer Bewegung unterworfen sind, beispielsweise am Ende einer solchen Betätigungshülse. Dadurch kann Verschmutzung von funktionsmäßig wichtigen Teilen ferngehalten werden.

Die einzelnen, weitgehend gesonderten Abschnitte können auch besonders wirksam und herstellungsgünstig so angeordnet werden, daß sie alle materialmäßig zusammenhängen. Dies kann sogar dann gewährleistet werden, wenn an der Oberfläche der Hülse voneinander gesonderte Bereiche sichtbar sind. In diesem Falle könnte die Verbindung zwischen den einzelnen Elementen durch Verbindungsabschnitte hergestellt sein, die unter der Oberfläche verlaufen. So kann beispielsweise eine umlaufende Stoßkante auf diese Weise mehrere an sich gesonderte Griffmulden verdeckt miteinander verbinden.

Die Erfindung ermöglicht es also, an einer Hülse für ein Gartengerät, beispielsweise einer Schnellkupplung, in unterschiedlichen Einzelabschnitten Oberflächenteile aus einem flexiblen, weichen und griffgünstigen Material vorzusehen. Sie werden im Zweikomponenten-Spritzgußverfahren angebracht und können auch besondere Stoßkanten umfassen. Durch unterschiedliche farbliche Gestaltung und abwechselnde Freilegung der Oberfläche der beiden Kompositmaterialien von Grundkörper und Zusatzelement kann auch eine Beschriftung, Kennzeichnung oder Gestaltung der Oberfläche erzielt werden.

### KURZBESCHREIBUNG DER ZEICHNUNG

Ausführungsbeispiele der Erfindung sind in den Zeichnungen dargestellt und werden im Folgenden näher erläutert. In den Zeichnungen zeigen:
- Fig. 1: einen Längsschnitt durch eine Betätigungshülse einer Schlauch-Schnellkupplung,
- Fig. 2: eine Außenansicht der Hülse,
- Fig. 3: einen Querschnitt nach der Linie III in Fig. 1,
- Fig. 4: einen Querschnitt nach der Linie IV in Fig. 1 und
- Fig. 5: einen Teil-Längsschnitt durch eine Schlauchschnellkupplung und ihre Betätigungshülse.

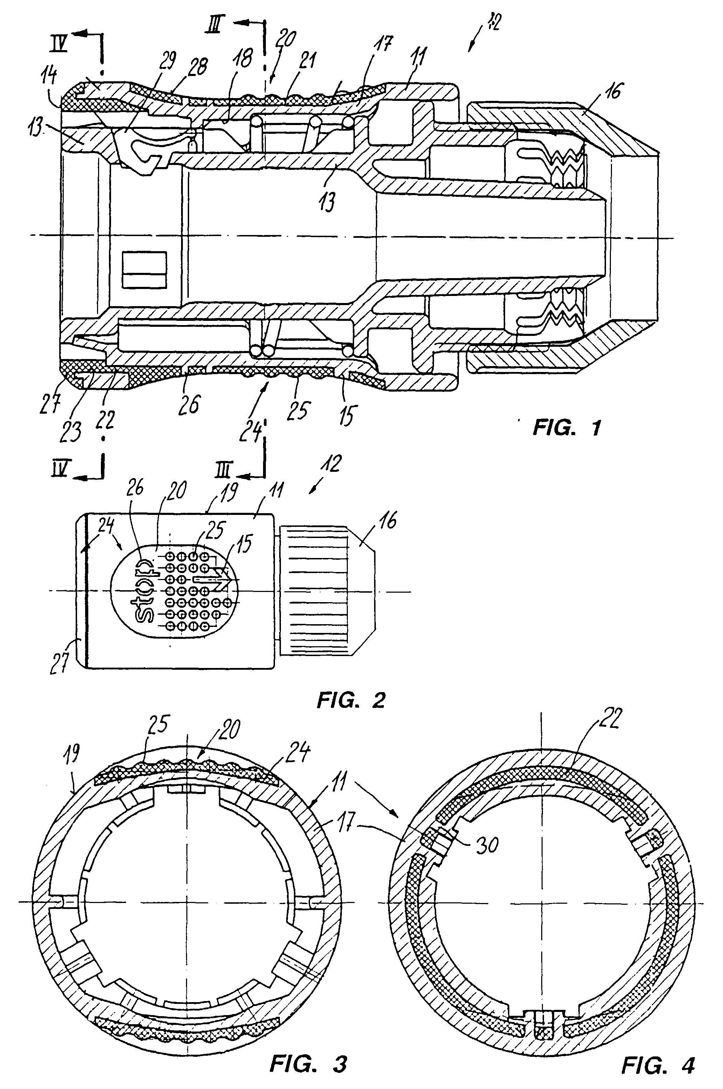

### BESCHREIBUNG DES AUSFÜHRUNGSBEISPIELS DER FIGUREN 1 BIS 4

Die Figuren 1 bis 4 zeigen eine Hülse 11, die die Betätigungshülse einer Schlauch-Schnellkupplung 12 ist. Im Hauptkörper 13 der Schlauchkupplung 12 sind federnde Greifnocken 29 schwenkbeweglich geführt, die einen von der Stirnseite 14 her eingeführten, nicht dargestellten Anschlußnippel ergreifen und festhalten. Bei Betätigung der Hülse 11 durch Axialverschiebung in Richtung des Pfeils 15 geben die Greifnocken 29 den Anschlußnippel frei und lösen somit die Kupplung. Mittels eines Schlauchanschlusses, der eine Aufschraubmutter 16 enthält, wird an der gegenüberliegenden Seite ein Schlauch angeschlossen. Wegen der mechanischen Einzelheiten der Schlauchkupplung wird auf das deutsche Patent 1 775 302 Bezug genommen, auch zum Zwecke der Offenbarung.

Die Hülse hat einen im wesentlichen zylindrischen Grundkörper 17, der aus einem relativ harten, gestaltfesten thermoplastischem Kunststoff besteht. Die beidseitig offene und mit einer großen, innen verschiedentlich verrippten Öffnung 18 versehene Hülse hat an ihrer zylindrischen Oberfläche 19 mehrere muldenförmige Einsenkungen 20, in deren Bereich zusätzliche Ausnehmungen 21 vorgesehen sind. Diese Ausnehmungen 21 stehen über Verbindungsabschnitte 22 mit einer Ringausnehmung 23 in Verbindung, die im Bereich der Stirnseite 14 der Hülse vorgesehen ist. Die Verbindungsabschnitte verlaufen dabei unter der Oberfläche 19 der Hülse 11.

In diesen Ausnehmungen 21, 23 ist ein Zusatzelement 24 verankert, das in den Ausnehmungen unlösbar bzw. flächenmäßig haftend, beispielsweise nach Art einer Verschweißung, festgelegt ist. Seine Oberfläche ist profiliert, so daß sich im Bereich der Griffmulden 20 eine ovale Muldenform mit zahlreichen halbkugeligen Vorsprüngen 25 bildet. Die Dicke des Zusatzelementes liegt in der gleichen Größenordnung wie die der darunter bzw. darüber stehenbleibenden Grundkörper-Wandung, hat also eine nicht unerhebliche Dicke.

Die Ausnehmungen 21 sind so gestaltet, daß an einigen Stellen Rippen des Grundkörpers entstehen, die die Form von Buchstaben 26 bzw. Zeichen (Pfeil 15) haben. Sie werden nicht von dem Zusatzelement 24 überdeckt, so daß sie in der Farbe und Struktur des Grundkörpers 17 stehen bleiben. Dessen Material hat eine andere Färbung als das Zusatzelement.

Das Zusatzelement besteht aus einem flexiblen, gummiartigen Werkstoff, vorzugsweise auch einem thermoplastischem Kunststoff.

Das flexible und gummiartige Material des Zusatzelementes schafft dabei auch an der Stirnkante 14 einen Ring, der eine umlaufende flexible Stoßkante 27 bildet. Die Oberfläche 28 des Zusatzelementes wird vorzugsweise relativ rauh, auf jeden Fall nicht hochglänzend, gewählt, um eine griffgünstige Struktur zu haben.

Die Figuren 3 und 4 zeigen die gegenüber der Zylinderform abgeflachte Fläche der Mulde 20 und die im Inneren der Hülse geführten Verbindungsabschnitte 22. Sie sind über den Umfang durch Stege 30 unterbrochen, die den Zusammenhalt des Grundkörpers sicherstellen. Auch diese ineinander verzahnte Gestaltung sorgt für eine feste und unlösbare Verbindung zwischen Grundkörper und Zusatzelement.

### HERSTELLUNG

Zur Herstellung wird wie folgt vorgegangen: In eine Kunststoff-Spritzgußform, deren Formhohlraum der Form des Grundkörpers 17 entspricht, wird das relativ harte Kunststoffmaterial für den Grundkörper eingespritzt. Nach dessen Erhärtung wird z.B. durch Ziehen entsprechender Schieber und/oder Hineinbringen anderer Formbegrenzungsteile der Formhohlraum so verändert, daß nun die Außenform der Hülse einschließlich des Zusatzelementes 24 umschlossen ist. Es wäre aber auch die Überführung des Grundkörpers in eine andere, der Endform der Hülse entsprechende Spritzgußform möglich. Danach wird bei noch warmem Material des Grundkörpers das ebenfalls thermoplastische, aufgeschmolzene Material für das Zusatzelement 24 eingespritzt, das die nunmehr freien Hohlräume füllt und als einen Teil ihrer Spritzform die Ausnehmungen 21 verwendet, an denen sie nach Art einer Verschweißung haftet. Nach Erhärtung des Materials des Zusatzelementes wird die Form geöffnet und die fertige Hülse ausgestoßen.

Es ist dabei zu erkennen, daß das Material durch die Verbindungsabschnitte 22 strömen kann, so daß bezüglich der Angüsse und Materialverteilung größte Freiheit herrscht.

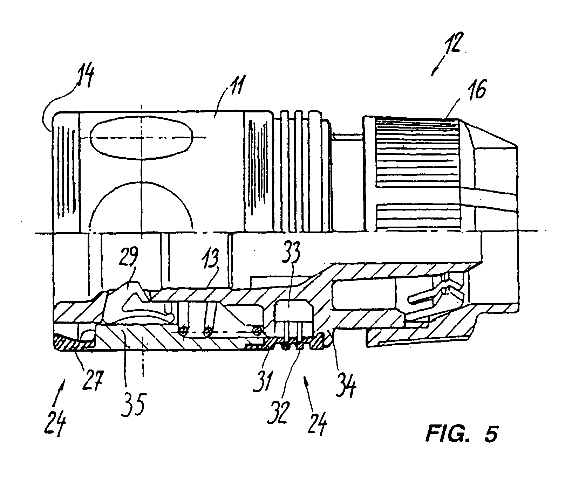

### BESCHREIBUNG DER AUSFÜHRUNGSFORM NACH Fig. 5

In Fig. 5 ist eine Schlauchkupplung 12 dargestellt, deren Hülse 11 zwei Abschnitte von Zusatzelementen aufweist, die miteinander nicht in Verbindung stehen. Es handelt sich dabei um die stirnseitige Stoßkante 27 und einen an der gegenüberliegenden Stirnseite der Hülse 11 vorgesehene Abschnitt 31 des Zusatzelementes 24. Beide laufen ganz um die Hülse um. An den Abschnitt 31 schließt sich ein faltenbalgartiger Abdeckabschnitt 32 an, der den Spalt 33 zwischen der Hülse 11 und einem Flansch 34 des Hauptkörpers 13 der Schlauchkupplung überdeckt und an den Flansch 13 angeschlossen ist. Dort kann er beispielsweise in einer Einschnappverbindung festgelegt sein. Bei der axialen Betätigung der Hülse 11 zum Entkuppeln (in Fig. 5 nach rechts) wird der faltenbalgartige Abdeckabschnitt zusammengeschoben. Es ist zu erkennen, daß ein Vorsprung 35 an der Hülse dem Greifnocken 29 dann das Ausweichen nach außen gestattet, um die Entkupplung zu bewirken.

Die Abschnitte 27, 31 des Zusatzelementes 24 können auf die beschriebene Weise mit der Hülse befestigt sein. Auch hier könnte im Bereich der Griffmulden das Zusatzelement vorgesehen sein.

## Patentansprüche

1. Hülse eines Gartengerätes, insbesondere betätigbare Kupplungshülse (11) einer Schlauch-Schnellkupplung (12), die einen Grundkörper (17) aus relativ hartem Kunststoffmaterial und ein einen Oberflächenabschnitt der Hülse (11) einnehmendes, aus flexiblem, gummiartigem Material bestehendes Zusatzelement (24) aufweist, das mit dem Grundkörper (17) unlösbar verbunden ist,
dadurch gekennzeichnet, daß das Zusatzelement (24) in schalen- oder rinnenartige Ausnehmungen (21, 22) des Grundkörpers (17) eingespritzt und mit dem Grundkörper (17) durch ein Zweikomponenten-Spritzverfahren haftend verbunden ist.

2. Hülse nach einem der vorhergehenden Ansprüche, dadurch gekennzeichnet, daß das Zusatzelement (24) zumindest teilweise die Hülse (11) nicht ganz umfassende, ggf. auch gänzlich voneinander gesonderte Oberflächenabschnitte enthält.

3. Hülse nach einem der vorhergehenden Ansprüche, gekennzeichnet durch eine profilierte, vorzugsweise eine Griffstruktur bildende Oberflächengestaltung des Zusatzelementes (24).

4. Hülse nach einem der vorhergehenden Ansprüche, dadurch gekennzeichnet, daß das Zusatzelement (24) nur teilweise an der Hülse (11) festgelegt ist und vorzugsweise eine flexible Abdeckung (32) eines Spaltes (33) bzw. eine Verbindung zu einem der Hülse (11) benachbarten Bauteil (13) bildet.

5. Hülse nach einem der vorhergehenden Ansprüche, dadurch gekennzeichnet, daß sich Oberflächenabschnitte des Zusatzelementes (24) und des Grundkörpers (17) derart abwechseln, daß sich aus der Abfolge Zeichen, Buchstaben, Bildelemente oder dgl. (15, 26) ausbilden und/oder daß Grundkörper (17) und Zusatzelement (24) unterschiedliche Farben aufweisen.

6. Hülse nach einem der vorhergehenden Ansprüche, dadurch gekennzeichnet, daß das Zusatzelement (24) im Bereich einer Stirnkante (14) der Hülse (11) umlaufend ausgebildet ist und ggf. eine Stoßkante bildet.

7. Hülse nach einem der vorhergehenden Ansprüche, gekennzeichnet durch insbesondere bei Nässe griffige, bevorzugt besonders alterungsbeständige Materialeigenschaften des Zusatzelementes (14).

8. Hülse nach einem der vorhergehenden Ansprüche, dadurch gekennzeichnet, daß das Zusatzelement (24) an der Hülse (11) eine an einer Stirnkante (14) umlaufende Stoßkante (27) bildet, die, ggf. über einen unter der Oberfläche des Grundkörpers (17) verlaufenden Verbindungsabschnitt (22) mit einzelnen Griffabschnitten (20) des Zusatzelementes (24) verbunden sind, die vorzugsweise in Mulden der Hülse (11) liegen und ggf. in Gestalt und/oder Oberflächenstruktur profiliert sind.

9. Verfahren zur Herstellung der Hülse (11) eines Gartengerätes, bei dem ein Grundkörper (17) der Hülse (11) im Kunststoff-Spritzgußverfahren aus einem thermoplastischen, relativ harten Kunststoffmaterial mit schalen- oder rinnenartigen Ausnehmungen hergestellt wird und anschließend, vorzugsweise unmittelbar anschließend, ein flexibles, gummiartiges thermoplastisches Kunststoffmaterial in die Ausnehmungen (21, 22) in Haftverbindung mit dem Material des Grundkörpers (17) eingespritzt wird.

10. Verfahren nach Anspruch 9, dadurch gekennzeichnet, daß die Einspritzung des Zusatzelementes (24) bei noch warmem Material des Grundkörpers (17) und vorzugsweise in der gleichen, ggf. angepaßten Kunststoffspritzgußform erfolgt.

## Claims

1. A sleeve of a gardening tool, particularly an actuatable coupling sleeve (11) of a quick-acting hose coupling (12) comprising a base body (17) of a relatively hard plastics material and an auxiliary element (24) of a flexible rubber-like material constituting a surface section of said sleeve (11), said auxiliary element (24) being connected to said base body (17) non-releasably, characterized in that said auxiliary element (24) is injection molded in dished or fluted recesses (21, 22) of said base body (17) and is bondingly connected to said base body (17) by a two-component injection molding procedure.

2. The sleeve as set forth in any of the preceding claims, characterized in that said auxiliary element (24) includes surface sections surrounding at least in part said sleeve (11) not fully which, where required, are also totally separate from each other.

3. The sleeve as set forth in any of the preceding claims, characterized in that said auxiliary element (24) features a contoured surface structure preferably forming a gripping structure.

4. The sleeve as set forth in any of the preceding claims, characterized in that said auxiliary element (24) is defined only partly at said sleeve (11) and preferably forms a flexible cover (32) of a gap (33) or a connection to a component (13) adjoining said sleeve (11).

5. The sleeve as set forth in any of the preceding claims, characterized in that surface sections of said auxiliary element (24) and of said base body (17) alternate such that from the sequence symbols, letters, pictorial elements or the like (15, 16) materialize and/or said base body (17) and said auxiliary element (24) feature differing colors.

6. The sleeve as set forth in any of the preceding claims, characterized in that said auxiliary element (24) is formed surrounding an end face (14) of said sleeve (11) and forms, where necessary, a bump rim.

7. The sleeve as set forth in any of the preceding claims characterized in that especially in wet circumstances said auxiliary element (24) has good-grip, preferably in particular, non-aging material properties.

8. The sleeve as set forth in any of the preceding claims, characterized in that said auxiliary element (24) forms surrounding one end face (14) on said sleeve (11) a bump rim (27) jointed, where necessary, via a jointing section (22) oriented beneath the surface of said base body (17) to individual grip sections (20) of said auxiliary element (24), said sections (20) being located preferably in dished portions of said sleeve (11) and, where necessary, are configured in design and/or surface structure.

9. A process for manufacturing said sleeve (11) of a gardening tool wherein said base body (17) of said sleeve (11) is manufactured by a plastics injection molding process of a relatively hard, thermoplastic material with dished or fluted recesses and subsequently, preferably directly following, a flexible rubber-like, thermoplastic material is injected into said recesses (21, 22) in bonding connection with the material of said base body (17).

10. The process as set forth in claim 9, characterized in that injection of said auxiliary element (24) occurs when the material of said base body (17) is still hot and preferably in the same plastics injection mold or one suitably adapted therefor.

## Revendications

1. Douille d'un outil de jardinage, notamment douille de raccordement (11) d'un raccord rapide de tuyaux souples (12), qui présente un corps de base (17) en matière plastique relativement dure et un élément additionnel (24) occupant une section de surface de la douille (11) en matière flexible, gommeuse, qui est joint de manière indétachable avec le corps de base (17), caractérisé en ce que l'élément additionnel (24) est injecté dans des creux (21, 22) genre cuve ou cannelure du corps de base (17) et raccordé avec le corps de base (17) par un procédé d'injection à deux composantes de manière adhérente.

2. Douille d'après une des revendications précédentes, caractérisée en ce que l'élément additionnel (24) comprend des sections de surface qui au moins en partie n'entourent pas complètement la douille (11) et étant éventuellement aussi complètement séparées l'une de l'autre.

3. Douille d'après une des revendications précédentes, caractérisée par un modelage de surface de l'élément additionnel (24) profilé, de préférence formant une structure de manipolation.

4. Douille d'après une des revendications précédentes, caractérisée en ce que l'élément additionnel (24) est fixé seulement en partie sur la douille (11) et forme de préférence un recouvrement (32) flexible d'une fente (33) ou encore un raccordement vers un élément constructif (13) limitrophe à la douille (11).

5. Douille d'après une des revendications précédentes, caractérisée en ce que des sections de surface de l'élément additionnel (24) et du corps de base (17) s'alternent de telle manière que des signes, des lettres, des éléments d'image ou similaires (15, 26) se réalisent par la séquence et/ou en ce que le corps de base (17) et l'élément additionnel (24) présentent des couleurs différentes.

6. Douille d'après une des revendications précédentes, caractérisée en ce que l'élément additionnel (24) est réalisé de manière à faire le tour dans le domaine d'une arête frontale (14) de la douille(11 ) et forme éventuellement un rebord pare-chocs.

7. Douille d'après une des revendications précédentes, caractérisée par des caractéristiques de matériau de l'élément additionnel (24) de bonne maniabilité notamment dans des conditions d'humidité et de préférence de résistance au vieillissement.

8. Douille d'après une des revendications précédentes, caractérisée en ce que l'élément additionnel (24) forme sur la douille (11) un rebord (27) qui fait le tour à une arête frontale (14), lequel sont raccordés, au moyen éventuellement d'une section de raccordement (22), s'étendant au-dessous de la surface du corps de base (17), avec des sections de manette (20) de l'élément additionnel (24), lesquelles se trouvent de préférence dans des creux en auge de la douille (11 ) et qui sont éventuellement profilées par la forme et/ou par la structure de la surface.

9. Procédé pour la fabrication de la douille (11) d'un outil de jardinage, pour lequel un corps de base (17) de la douille (11) est fabriqué par un procédé de moulage par injection de matière plastique en une matière plastique thermoplastique relativement dure avec des creux genre cuve ou gorge et ensuite, de préférence immédiatement ensuite une matière plastique flexible, gommeuse, thermoplastique est injectée dans les creux (21, 22) en raccordement par adhérence avec la matière du corps de base (17).

10. Procédé d'après la revendication 9, caractérisé en ce que l'injection de l'élément additionnel (24) est effectuée le matériau du corps de base (17) étant encore chaud et de préférence dans le même moule de moulage par injection de matière plastique, éventuellement adapté.
